# DEMANDE DE BREVET EUROPEEN

(11) **EP 1 520 966 A2**
(43) Date de publication de la demande: **06.04.2005**
(21) Numéro de dépôt: 04292324.3
(22) Date de dépôt: 29.09.2004
(51) Int. Cl.: F02B 29/08, F01L 1/34, F01L 1/26, F02D 13/02

(54) **Procédé de commande d'un moteur suralimenté et moteur à combustion interne correspondant**

(30) Priorité: 02.10.2003 FR 0311568
(71) Demandeur: Peugeot Citroen Automobiles S.A., 78140 Vélizy Villacoublay (FR)
(72) Inventeur: Lanteires, Fabien, 75014 Paris (FR)
(74) Mandataire: Jacobson, Claude

(57) **Abrégé**

Ce procédé de commande d'un moteur à combustion interne ayant un cylindre muni d'une soupape d'échappement et d'un piston mobile entre un point mort bas (PMB) et un point mort haut (PMH) et pouvant être suralimenté par au moins un turbocompresseur entraîné par les gaz d'échappement du cylindre, comprend, lors d'un cycle d'échappement élémentaire, une première étape d'échappement (E1) entre un premier instant d'ouverture (OE1) et un premier instant de fermeture (FE1) d'une soupape d'échappement. Le procédé comprend une deuxième étape d'échappement (E2), lors du même cycle d'échappement élémentaire, correspondant à un deuxième instant d'ouverture (OE2) et un deuxième instant de fermeture (FE2) d'une soupape d'échappement.

Application aux moteurs de véhicules automobiles.

## Description

La présente invention concerne un procédé de commande d'un moteur à combustion interne ayant au moins un cylindre muni d'au moins une soupape d'échappement et d'un piston mobile entre un point mort bas et un point mort haut et pouvant être suralimenté par au moins un turbocompresseur entraîné par les gaz d'échappement du cylindre, du type comprenant, lors d'un cycle d'échappement élémentaire, une première étape d'échappement entre un premier instant d'ouverture et un premier instant de fermeture d'au moins une soupape d'échappement.

Elle s'applique notamment aux moteurs suralimentés à essence ou diesel de véhicules automobiles.

Le document FR-A-2 581 424 décrit un moteur à combustion interne ayant un turbocompresseur alimenté par les gaz d'échappement du moteur et adapté pour comprimer le flux d'air d'admission du moteur.

Ce document décrit en outre un procédé de commande du moteur visant à répartir dans le temps les pics de pression du gaz arrivant au turbocompresseur à partir des différents cylindres.

Lorsque le conducteur demande une forte accélération, le turbocompresseur nécessite un temps de réponse dû au temps nécessaire à la mise en action de la turbine.

L'invention a pour but de pallier cet inconvénient et de proposer un procédé de commande qui permette une mise en action rapide du turbocompresseur.

A cet effet, l'invention a pour objet un procédé du type précité, caractérisé en ce qu'il comprend au moins une deuxième étape d'échappement, lors du même cycle d'échappement élémentaire, correspondant à un deuxième instant d'ouverture et un deuxième instant de fermeture d'au moins une soupape d'échappement.

Selon des modes particuliers de réalisation, l'invention comporte l'une ou plusieurs des caractéristiques suivantes:
- le premier instant d'ouverture est décalé dans le temps par rapport au point mort bas du piston associé à la soupape d'échappement ;
- la première étape d'échappement est une étape initiale, et le premier instant d'ouverture est situé avant le point mort bas ;
- la première étape d'échappement est une étape initiale, et le premier instant d'ouverture est situé après le point mort bas ;
- le premier instant de fermeture est situé avant le deuxième instant de fermeture ;
- le premier instant de fermeture est situé avant le deuxième instant d'ouverture ;
- le cylindre comprend une seule soupape d' échappement ;
- le premier instant de fermeture est situé après le deuxième instant d'ouverture ;
- le cylindre est muni d'au moins deux soupapes d'échappement ;
- les soupapes d'échappement peuvent être commandées individuellement, et lors de deux étapes d'échappement successives les soupapes d'échappement sont actionnées de manière alternée ;
- le procédé comprend plus de deux étapes d'échappement,'notamment trois ou quatre, définies chacune par un instant d'ouverture et un instant de fermeture ;
- le procédé comprend une étape terminale qui est la dernière étape d'échappement du cycle de fonctionnement, et dont l'instant de fermeture est situé proche du point mort haut du piston associé à la soupape d'échappement ;
- l'instant de fermeture de l'étape terminale se situe dans un intervalle de plus ou moins 20 degrés du vilebrequin par rapport au point mort haut ;
- le deuxième instant d'ouverture est situé après le point mort bas ;
- le premier instant de fermeture est situé sensiblement à la mi-course du piston associé entre le point mort bas et le point mort haut ;
- le premier instant de fermeture se situe dans un intervalle de plus ou moins 30 degrés du vilebrequin par rapport à la position de mi-course du piston ;
- au moins une étape d'échappement est une étape d'échappement à ouverture partielle dans laquelle une soupape d'échappement est dans une position intermédiaire entre des positions complètement ouverte et fermée, une étape qui suit ou précède l'étape à ouverture partielle, est une étape dans laquelle la soupape d'échappement est dans la position complètement ouverte ;
- le premier instant de fermeture coïncide avec le deuxième instant d'ouverture ; et
- les étapes d'échappement sont adaptées pour créer au moins un pic temporaire de pression dans un conduit d'échappement, et de préférence au moins deux pics de pression.

L'invention a en outre pour objet un moteur à combustion interne comprenant un cylindre muni d'au moins une soupape d'échappement et un turbocompresseur, le moteur comprenant en outre des moyens de commande de la soupape d'échappement, caractérisé en ce que les moyens de commande sont adaptés pour mettre en oeuvre un procédé tel que décrit ci-dessus.

L'invention sera mieux comprise à la lecture de la description qui va suivre, donnée uniquement à titre d'exemple et faite en se référant aux dessins annexés, sur lesquels :
- la Figure 1 est une vue schématique partielle en coupe, dans un plan axial, d'une partie d'un moteur à combustion interne de véhicule automobile, d'un premier type, adapté à la mise en oeuvre d'un procédé conforme à l'invention ;
- la Figure 3 est une vue schématique partielle, en plan de dessus, d'une partie d'un moteur à combustion interne de véhicule automobile, d'un deuxième type, adapté à la mise en oeuvre d'un procédé conforme à l'invention ; et

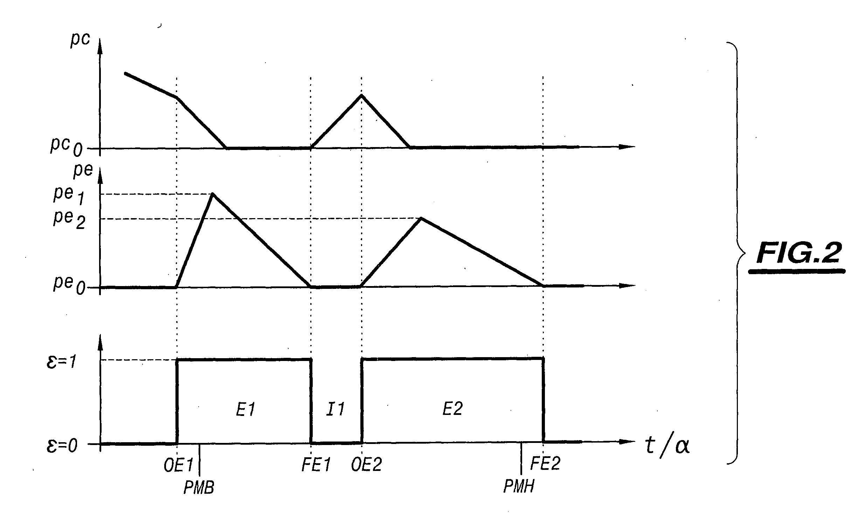

- les Figures 2 et 4 à 9 sont des diagrammes représentatifs des commandes d'échappement, correspondant chacun à un procédé de commande selon un mode particulier de mise en oeuvre de l'invention.

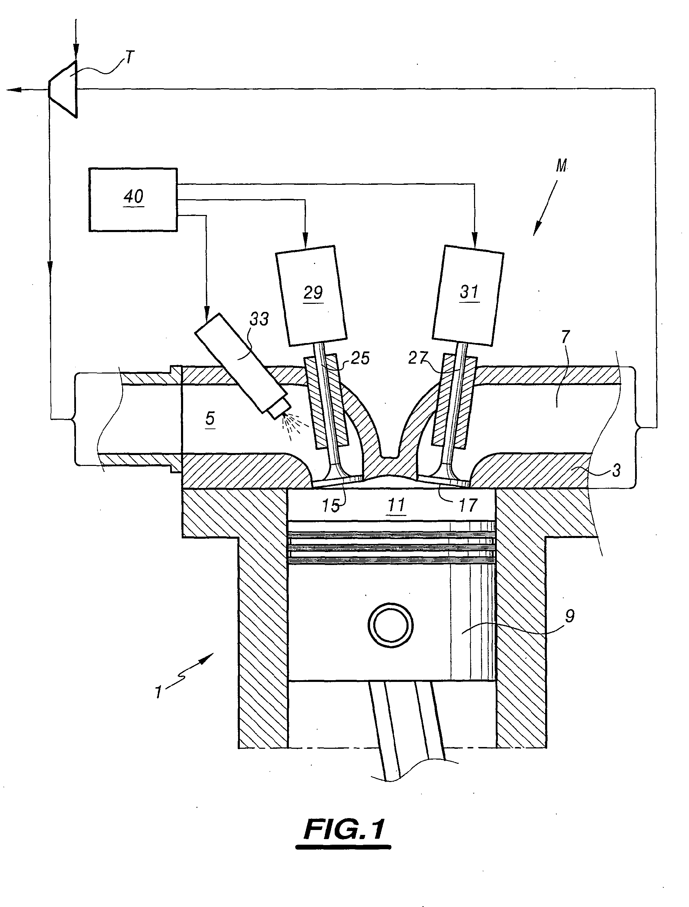

La partie de moteur M représentée à la Figure 1 comprend essentiellement un cylindre 1 et une culasse 3 coiffant ledit cylindre, dans laquelle sont formés, d'une part, un conduit d'admission 5 et, d'autre part, un conduit d'échappement 7.

Le moteur M est un moteur à combustion interne, donc soit un moteur à essence à allumage commandé, soit un moteur diesel.

Un piston 9, monté coulissant à l'intérieur du cylindre 1, délimite avec la culasse 3 et la paroi du cylindre, une chambre de combustion 11. Le conduit d'admission 5 et le conduit d'échappement 7 débouchent dans la chambre de combustion 11, respectivement par un orifice d'admission 15 et un orifice d'échappement 17. Le piston 9 est mobile entre un point mort haut et un point mort bas.

La partie de moteur représentée comprend en outre une soupape d'admission 25 et une soupape d'échappement 27, associées au cylindre 1, et commandées par des actionneurs respectifs 29, 31 de façon à sélectivement obturer ou libérer respectivement l'orifice d'admission 15 et l'orifice d'échappement 17.

La partie de moteur représentée, associée au cylindre 1, comprend de plus un injecteur de carburant 33, agencé pour injecter du carburant de façon contrôlée électroniquement dans le conduit d'admission 5.

Le moteur M comprend en outre un turbocompresseur T relié, d'une part, au conduit d'échappement 7 pour être entraîné par les gaz d'échappement circulant dans la conduite 7 et, d'autre part, au conduit d'admission 5 pour comprimer l'air d'admission circulant dans la conduite 5.

Le pilotage des actionneurs 29, 31 et de l'injecteur 33 est assuré par une unité électronique de contrôle et de commande 40.

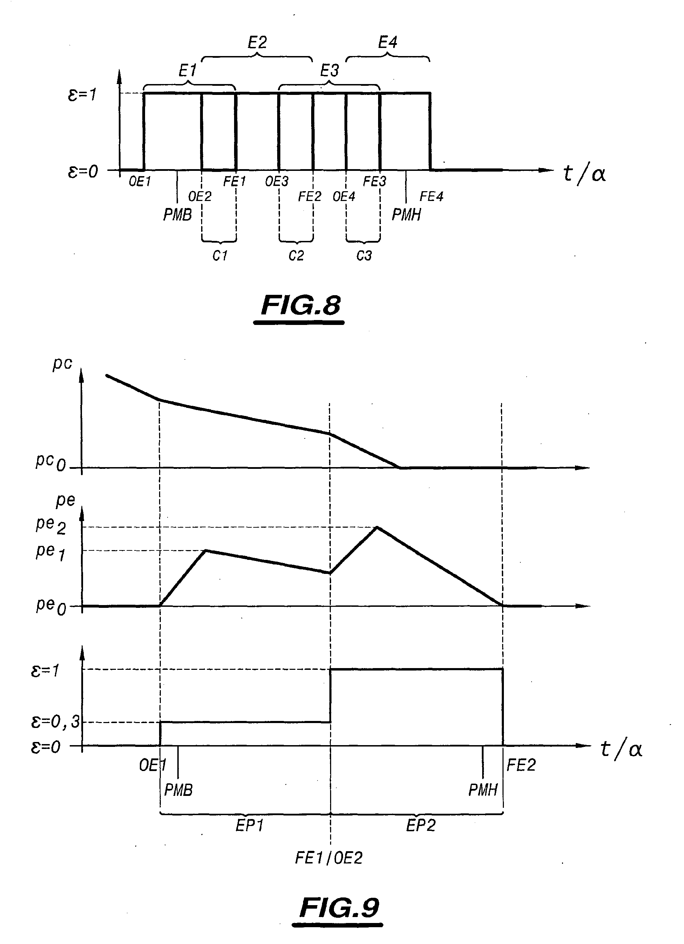

Les diagrammes des Figures 2 et 4 à 9 montrent les phases d'ouverture et de fermeture des soupapes d'échappement. Sur ces diagrammes, les phases de fonctionnement des soupapes d'échappement seront représentées par l'état ε sur des intervalles de temps t correspondant à des plages d'angle de rotation α du vilebrequin. L'état des soupapes sera considéré soit complètement ouvert (ε=1), soit complètement fermé (ε=0), de façon à simplifier la représentation graphique des phases de fonctionnement. Ainsi, on supposera que la variable de levée ou d'état ε des soupapes, représentée en ordonnées, passe instantanément de l'une à l'autre de ses valeurs minimale (égale à 0) et maximale (égale à 1), sauf pour le mode de mise en oeuvre correspondant à la Figure 9 (voir ci-après). Les Figures montrent en outre les points morts bas PMB et haut PMH du piston 9.

Sur les Figures 2 et 9 sont en outre illustrées les allures de la pression pc dans le cylindre 1 et de la pression pe dans le conduit d'échappement en fonction du temps t.

On va expliquer, à l'aide de la Figure 2, un premier mode de mise en oeuvre du procédé selon l'invention.

Un cycle de fonctionnement du cylindre 1 comprend au moins une étape d'admission, non représentée, lors de laquelle la soupape d'admission 25 est ouverte.

L'étape d'admission est située essentiellement entre un point mort haut PMH et le point mort bas suivant PMB du piston 9. La soupape d'admission est à l'état fermé au moins entre un point mort bas PMB et le point mort haut suivant PMH du piston.

Les étapes d'échappement décrites ci-après se déroulent lors d'un cycle d'échappement élémentaire.

Le procédé selon l'invention comprend une première étape d'échappement E1, constituant l'étape initiale d'échappement. Cette étape E1 est définie par un premier instant d'ouverture OE1 et par un premier instant de fermeture FE1 de la soupape d'échappement 27. Le procédé comprend une deuxième étape d'échappement E2 ou étape terminale, définie par un deuxième instant d'ouverture OE2 et un deuxième instant de fermeture FE2 de la soupape 27. Le deuxième instant d'ouverture OE2 est situé après le premier instant de fermeture FE1. Entre les deux instants FE1 et OE2 est situé un intervalle de fermeture I1 dans lequel la soupape d'échappement 27 est fermée.

Le procédé selon l'invention crée donc des ondes de pression par une modification du débit de gaz d'échappement circulant à travers la soupape.

Le premier instant d'ouverture OE1 est situé avant le point mort bas PMB du piston 9 et le premier instant de fermeture FE1 est situé proche de la mi-course entre PMB et PMH. Le deuxième instant de fermeture FE2 est situé après le point mort haut PMH.

Comme illustré sur la Figure 2, pendant la première étape d'échappement E1, la pression pc régnant dans le cylindre 1 chute jusqu'à une pression pc₀ et il se produit un premier pic de pression pe₁ dans la conduite d'échappement 7 par la diminution de volume induite par le piston 9 se déplaçant vers le point mort haut PMH. Pendant l'intervalle de fermeture I1, la pression pc dans le cylindre 1 augmente en raison de la montée du piston 9. Lors de l'étape E2, la pression pc dans le cylindre 1 chute et il se produit un deuxième pic de pression pe₂ dans la conduite d'échappement 7. La pression pe₂ est inférieure à la pression pe₁ du premier pic.

Le procédé selon l'invention crée donc des ondes de pression par une modification du débit de gaz d'échappement circulant à travers la soupape d'échappement 27.

Ainsi, lors de l'ouverture de la soupape d'échappement 27 une pression élevée règne dans le cylindre 1. En conséquence, le gaz d'échappement est poussé rapidement vers le turbocompresseur T et celui-ci est mis en action rapidement. La différence de pression entre l'entrée et la sortie de gaz d'échappement du turbocompresseur T est importante, ce qui mène à une compression importante de l'air d'admission.

En outre, le gaz d'échappement ayant une pression élevée, sa température est également élevée. En conséquence, lors d'un démarrage à froid du moteur M, le temps d'amorçage d'un catalyseur, éventuellement présent dans la conduite d'échappement 7, est faible.

En variante, le premier instant d'ouverture OE1 est situé après le point mort bas PMB. Ainsi, entre le point mort bas PMB et l'instant d'ouverture OE1, le piston 9 recomprime le gaz enfermé dans le cylindre 1, de sorte que la pression régnant dans le cylindre 1 lors de l'ouverture de la soupape 27 est importante.

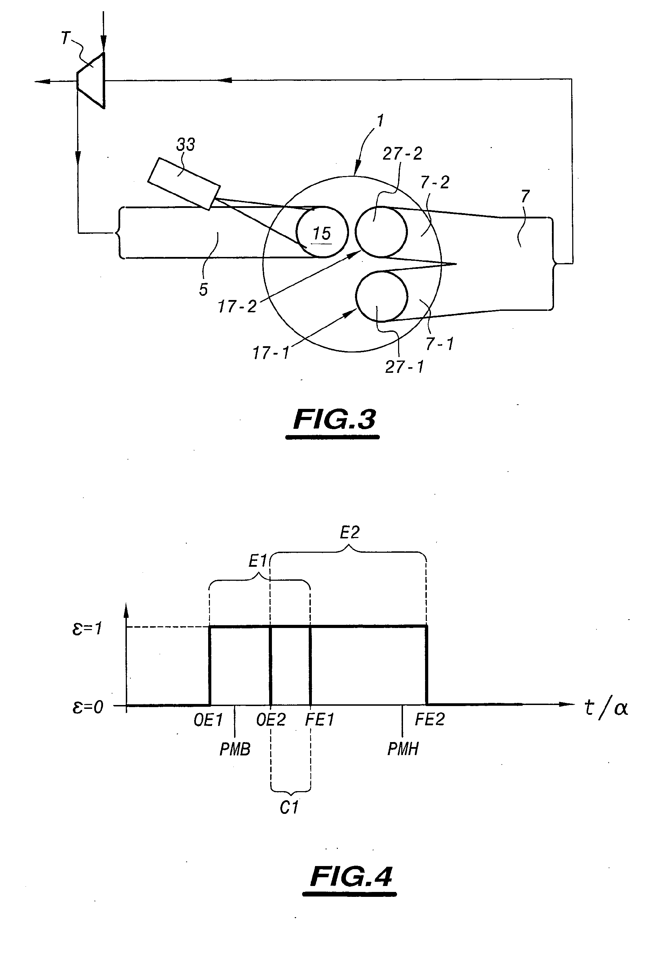

La Figure 3 montre schématiquement une partie d'une variante d'un moteur.

Le moteur représenté sur la Figure 3 diffère du moteur de la Figure 1 en ce qu'il est prévu deux orifices d'échappement 17-1, 17-2 communiquant avec deux conduits d'échappement respectifs 7-1, 7-2 qui s'étendent séparément jusqu'à une jonction en un conduit d'échappement commun 7. Les deux orifices d'échappement 17-1, 17-2 sont associés à deux soupapes d'échappement respectives 27-1, 27-2 pouvant être déplacées de manière indépendante. En variante, les soupapes 27-1, 27-2 sont déplacées simultanément, de sorte que les deux soupapes 27-1, 27-2 et les deux orifices d'échappement 17-1, 17-2 peuvent être assimilés à un ensemble d'une soupape d'échappement unique et d'un orifice d'échappement unique, tel qu'illustrés sur la Figure 1.

La Figure 4 montre un mode de mise en oeuvre du procédé qui ne peut être utilisé qu'avec le moteur de la Figure 3 et ceci uniquement lorsque les soupapes 27-1, 27-2 sont actionnées de manière indépendante.

Ce procédé diffère de celui de la Figure 2 en ce que la première étape d'échappement E1 est définie par des premiers instants d'ouverture OE1 et de fermeture FE1 de la soupape 27-1. La deuxième étape d'échappement E2 est définie par des deuxièmes instants d'ouverture OE2 et de fermeture FE2 de la seconde soupape d'échappement 27-2. De plus, le premier instant de fermeture FE1 est situé après le deuxième instant d'ouverture OE2. Ce procédé comprend donc un intervalle de chevauchement C1 des deux étapes E1 et E2, pendant lequel les deux soupapes 27-1, 27-2 sont ouvertes. L'instant de fermeture FE1 est situé proche de la mi-course du piston 9 entre les points morts bas PMB et haut PMH. Plus précisément, les instants d'ouverture OE1 et de fermeture FE1 peuvent se situer dans un intervalle de plus ou mois 20 degrés du vilebrequin par rapport respectivement au point mort bas et à la position de mi-course du piston.

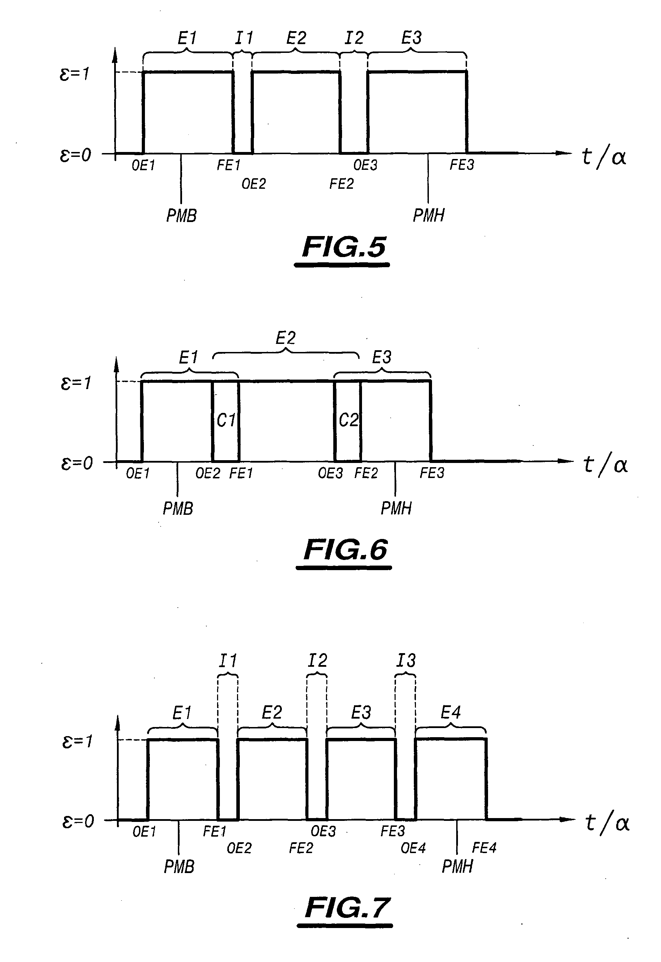

Les Figures 5 et 7 montrent deux autres modes de mise en oeuvre du procédé selon l'invention.

Le mode de mise en oeuvre de la Figure 5 comprend trois étapes successives d'échappement E1, E2, E3, dont chacune est définie par un instant d'ouverture OE1, OE2, OE3 et un instant de fermeture FE1, FE2, FE3. L'étape E1 est l'étape initiale, tandis que l'étape E3 est l'étape terminale. L'étape E2 est une étape intermédiaire. A chaque fois, entre deux étapes successives E1, E2 et E2, E3 existe un intervalle de fermeture I1, I2 pendant lequel les deux soupapes d'échappement 27-1, 27-2 sont à l'état fermé.

Ce mode de mise en oeuvre peut être utilisé selon deux variantes en utilisant le moteur de la Figure 3. Selon la première variante, lors des étapes E1 et E3, l'une des soupapes 27-1 ou 27-2 est ouverte, l'autre soupape 27-2 ou 27-1 étant maintenue fermée, tandis que lors de l'étape E2 l'autre soupape 27-2 ou 27-1 est ouverte, la première soupape 27-1 ou 27-2 étant maintenue fermée. Selon la seconde variante, lors de chacune des étapes E1 à E3 les deux soupapes 27-1 et 27-2 sont ouvertes.

Pendant les intervalles I1 et 12, le piston 9 recomprime le gaz dans le cylindre 1, ce qui conduit à chaque fois à un pic de pression temporaire lors de l'ouverture de la soupape suivante, de manière analogue aux pics de pression pe₁ et pe₂ du mode de mise en oeuvre du procédé de la Figure 2.

Le mode de mise en oeuvre du procédé de la Figure 7 ne se distingue du mode de mise en oeuvre de la Figure 5 que par une quatrième étape E4 d'échappement ayant des instants d'ouverture OE4 et de fermeture FE4. L'étape E4 est l'étape terminale, tandis que les étapes E2 et E3 sont des étapes intermédiaires.

Le fonctionnement est analogue au fonctionnement du mode de la Figure 5.

Les Figures 6 et 8 montrent deux autres variantes du procédé selon l'invention.

Le procédé de la Figure 6 comprend trois étapes d'échappement E1 à E3. Comme différence par rapport au procédé de la Figure 5, l'instant d'ouverture OE2 et OE3 d'une étape donnée E2 ou E3 est situé avant l'instant de fermeture FE1 et FE2 de l'étape immédiatement précédente E1 ou E2. Ainsi, ce procédé forme deux intervalles de chevauchement C1 et C2, analogues à l'intervalle C1 du mode de réalisation de la Figure 4.

Le procédé de la Figure 8 diffère du procédé de la Figure 6 par le fait qu'il comporte quatre étapes d'échappement E1 à E4. Les étapes forment des intervalles de chevauchement C1 à C3 analogues à ceux du procédé de la Figure 6.

Ces procédés ne peuvent être mis en oeuvre que par le moteur de la Figure 3.

On précisera ici que dans les exemples des Figures 7 et 8 où il y a quatre étapes, les instants de fermeture FE1 et FE2 se situent dans un intervalle de plus ou moins 30 degrés du vilebrequin par rapport à la position de mi-course du piston tandis que FE3 et FE4 se situent dans un intervalle de plus ou moins 20 degrés par rapport au point mort haut.

La Figure 9 montre une autre variante du procédé selon l'invention.

Ce procédé est mis en oeuvre dans un moteur dont la soupape d'échappement 27 peut être maintenue dans trois positions, à savoir les positions ouverte (ε=1) et fermée (ε=0) précitées, ainsi qu'une position intermédiaire d'ouverture partielle (ε=0,3 dans cet exemple).

Le procédé de la Figure 9 comprend une étape d'ouverture partielle EP1 et une étape EP2 qui suit immédiatement EP1.

L'instant de fermeture FE1 et l'instant d'ouverture OE2 coïncident, de telle sorte que la soupape est amenée de sa position intermédiaire (ε= 0,3) vers sa position complètement ouverte sans passer par l'état de fermeture.

Lors de l'étape d'ouverture partielle EP1, la soupape 27 prend sa position d'ouverture partielle, tandis que lors de l'étape EP2, la soupape est dans sa position complètement ouverte.

L'étape EP1 mène à un premier pic de pression pe₁ dans le conduit d'échappement 7 tandis que l'étape EP2 mène à un second pic de pression pe₂ dans le conduit d'échappement 7. La pression pe₂ du second pic est supérieure à celle du premier pe₁.

On notera ici qu'on ne sortirait pas du cadre de l'invention en prévoyant que l'étape d'ouverture partielle ait lieu après l'étape d'ouverture complète.

Grâce au procédé selon l'invention, qui crée des pics temporaires de pression, le temps de réaction du turbocompresseur T est faible. Les moyens de mise en oeuvre du procédé sont économiques, étant donné qu'ils ne nécessitent pas d'éléments supplémentaires tels que des moteurs d'entraînement du turbocompresseur T.

Le procédé permet d'obtenir au moins un pic de pression important dans la conduite d'échappement 7. Avantageusement, au moins deux pics de pression peuvent être créés dans la conduite d'échappement.

Par ailleurs, dans le cas de faibles débits de gaz d'échappement, à bas régime, le rendement du turbocompresseur T est amélioré grâce au débit de gaz d'échappement pulsé. Ainsi, le procédé selon l'invention conduit à un meilleur rendement du turbocompresseur T.

La mise en oeuvre de ce procédé par un moteur à commande électromécanique des soupapes permet d'utiliser le procédé pendant un temps précis de démarrage du turbocompresseur. Lorsque le turbocompresseur est en état de marche continu, d'autres procédés de réglage éventuellement plus appropriés peuvent être mis en oeuvre.

## Revendications

1. Procédé de commande d'un moteur à combustion interne (M) ayant au moins un cylindre (1) muni d'au moins une soupape d'échappement (27 ; 27-1, 27-2) et d'un piston (9) mobile entre un point mort bas (PMB) et un point mort haut (PMH) et pouvant être suralimenté par au moins un turbocompresseur (T) entraîné par les gaz d'échappement du cylindre (1), du type comprenant, lors d'un cycle d'échappement élémentaire, une première étape d'échappement (E1, E2, E3) entre un premier instant d'ouverture (OE1, OE2, OE3) et un premier instant de fermeture (FE1, FE2, FE3) d'au moins une soupape d'échappement (27; 27-1, 27-2), **caractérisé en ce qu'**il comprend au moins une deuxième étape d'échappement (E2, E3, E4), lors du même cycle d'échappement élémentaire correspondant à un deuxième instant d'ouverture (OE2, OE3, OE4) et un deuxième instant de fermeture (FE2, FE3, FE4) d'au moins une soupape d'échappement (27 ; 27-1, 27-2).

2. Procédé suivant la revendication 1, **caractérisé en ce que** le premier instant d'ouverture (OE1, OE2, OE3) est décalé dans le temps par rapport au point mort bas (PMB) du piston (9) associé à la soupape d'échappement (27 ;27-1, 27-2).

3. Procédé suivant la revendication 2, **caractérisé en ce que** la première étape d'échappement est une étape initiale (E1), et **en ce que** le premier instant d'ouverture (OE1) est situé avant le point mort bas (PMB).

4. Procédé suivant la revendication 2, **caractérisé en ce que** la première étape d'échappement est une étape initiale (E1), et **en ce que** le premier instant d'ouverture (OE1) est situé après le point mort bas (PMB).

5. Procédé suivant l'une quelconque des revendications 1 à 4, **caractérisé en ce que** le premier instant de fermeture (FE1, FE2, FE3) est situé avant le deuxième instant de fermeture (FE2, FE3, FE4).

6. Procédé suivant l'une quelconque des revendications 1 à 5, **caractérisé en ce qu'**il comprend plus de deux étapes d'échappement (E1, E2, E3, E4), notamment trois ou quatre, définies chacune par un instant d'ouverture (OE1, OE2, OE3, OE4) et un instant de fermeture (FE1, FE2, FE3, FE4).

7. Procédé suivant l'une quelconque des revendications 1 à 6, **caractérisé en ce qu'**il comprend une étape terminale (E2 ; E3 ; E4) qui est la dernière étape d'échappement du cycle de fonctionnement, et dont l'instant de fermeture (FE2 ; FE3 ; FE4) est situé proche du point mort haut (PMH) du piston (9) associé à la soupape d'échappement (27 ; 27-1, 27-2).

8. Procédé suivant la revendication 7, **caractérisé en ce que** l'instant de fermeture de l'étape terminale se situe dans un intervalle de plus ou moins 20 degrés du vilebrequin par rapport au point mort haut.

9. Procédé suivant l'une des revendications 1 à 8, **caractérisé en ce que** le deuxième instant d'ouverture (OE2) est situé après le point mort bas (PMB).

10. Procédé suivant l'une quelconque des revendications 1 à 9, **caractérisé en ce que** le premier instant de fermeture (FE1) est situé sensiblement à la mi-course du piston (9) associé entre le point mort bas (PMB) et le point mort haut (PMH).

11. Procédé suivant la revendication 10, **caractérisé en ce que** le premier instant de fermeture se situe dans un intervalle de plus ou moins 30 degrés du vilebrequin par rapport à la position mi-course du piston.

12. Procédé suivant l'une quelconque des revendications 1 à 11, **caractérisé en ce qu'**au moins une étape d'échappement est une étape d'échappement (EP1) à ouverture partielle dans laquelle une soupape d'échappement (27 ; 27-1, 27-2) est dans une position intermédiaire (ε=0,3) entre des positions complètement ouverte (ε=1) et fermée (ε=0), **en ce qu'**une étape (EP2) qui suit ou précède l'étape à ouverture partielle, est une étape dans laquelle la soupape d'échappement est dans la position complètement ouverte (ε=1).

13. Procédé suivant la revendication 12, **caractérisé en ce que** le premier instant de fermeture (FE1) coïncide avec le deuxième instant d'ouverture (OE2).

14. Procédé suivant l'une quelconque des revendications 1 à 12, **caractérisé en ce que** le premier instant de fermeture (FE1, FE2, FE3) est situé avant le deuxième instant d'ouverture (OE2, OE3, OE4).

15. Procédé suivant la revendication 14, **caractérisé en ce que** le cylindre (1) comprend une seule soupape d'échappement (27).

16. Procédé suivant l'une quelconque des revendications 1 à 12, **caractérisé en ce que** le premier instant de fermeture (FE1, FE2, FE3) est situé après le deuxième instant d'ouverture (OE2, OE3, OE4).

17. Procédé suivant l'une quelconque des revendication 1 à 14 et 16, **caractérisé en ce que** le cylindre (1) est muni d'au moins deux soupapes d'échappement (27-1, 27-2).

18. Procédé suivant la revendication 17, **caractérisé en ce que** les soupapes d'échappement (27-1, 27-2) peuvent être commandées individuellement, et **en ce que** lors de deux étapes d'échappement successives (E1, E2, E3, E4) les soupapes d'échappement (27-1, 27-2) sont actionnées de manière alternée.

19. Procédé suivant l'une quelconque des revendications 1 à 18, **caractérisé en ce que** les étapes d'échappement (E1, E2, E3, E4) sont adaptées pour créer au moins un pic temporaire de pression (pe₁, pe₂) dans un conduit d'échappement (7), et de préférence au moins deux pics de pression.

20. Moteur (M) à combustion interne comprenant un cylindre (1) muni d'au moins une soupape d'échappement (27 ;27-1 ,27-2) et un turbocompresseur (T), le moteur comprenant en outre des moyens de commande (31, 40) de la soupape d'échappement, **caractérisé en ce que** les moyens de commande (31, 40) sont adaptés pour mettre en oeuvre un procédé suivant l'une quelconque des revendications précédentes.
